(19) Europäisches Patentamt
European Patent Office
Office européen des brevets

(11) **EP 4 231 273 A1**

(12) **EUROPEAN PATENT APPLICATION**
published in accordance with Art. 153(4) EPC

(43) Date of publication:
**23.08.2023 Bulletin 2023/34**

(21) Application number: **20957736.0**

(22) Date of filing: **16.10.2020**

(51) International Patent Classification (IPC):
**G09C 1/00** *(2006.01)*　　　**G06N 20/00** *(2019.01)*

(52) Cooperative Patent Classification (CPC):
**G06N 20/00; G09C 1/00**

(86) International application number:
**PCT/JP2020/039123**

(87) International publication number:
**WO 2022/079907 (21.04.2022 Gazette 2022/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Nippon Telegraph And Telephone Corporation**
**Chiyoda-ku**
**Tokyo 100-8116 (JP)**

(72) Inventor: **HAMADA, Koki**
**Musashino-shi, Tokyo 180-8585 (JP)**

(74) Representative: **Murgitroyd & Company**
**Murgitroyd House**
**165-169 Scotland Street**
**Glasgow G5 8PL (GB)**

(54) **SECRET DECISION TREE LEARNING DEVICE, SECRET DECISION TREE LEARNING SYSTEM, SECRET DECISION TREE LEARNING METHOD, AND PROGRAM**

(57)　　A secret decision tree learning device according to an embodiment is a secret decision tree learning device for learning a decision tree by secret calculation, that includes an input unit configured to input a data set composed of a plurality of records including one or more attribute values of explanatory variables and attribute values of objective variables; and a learning unit configured to learn the decision tree by collectively dividing the data set at all nodes included in a hierarchical level, for each of a plurality of hierarchical levels of the decision tree.

Fig. 3

START

INPUT TRAINING DATA SET — S101

INITIALIZE GROUP INFORMATION VECTOR AND TAKEOVER PARAMETER — S102

REPEAT FOR EACH LAYER

CALCULATE DIVISION PARAMETER FROM TRAINING DATA SET AND GROUP INFORMATION VECTOR — S103

CALCULATE CLASSIFICATION RESULT FROM TRAINING DATA SET AND DIVISION PARAMETER — S104

CALCULATE TRAINING DATA SET AND TAKEOVER PARAMETER OF NEXT LAYER FROM TRAINING DATA SET, DIVISION PARAMETER, GROUP INFORMATION VECTOR, AND CLASSIFICATION RESULT — S105

EXTRACT INFORMATION OF EACH NODE FROM TAKEOVER PARAMETER AND DIVISION PARAMETER — S106

OUTPUT INFORMATION OF EACH NODE — S107

END

EP 4 231 273 A1

**Description**

[Technical Field]

The present invention relates to a secret decision tree learning device, a secret decision tree learning system, a secret decision tree learning method, and a program.

[Background Art]

As a method of obtaining a specific operation result without restoring encrypted numerical values (for example, NPL 1), a method called secret calculation has been known. In the method described in NPL 1, by performing encryption in which numerical fragments are distributed to three secret calculation devices, and having three secret calculation devices perform cooperative calculation, results of addition/subtraction, constant addition, multiplication, constant multiplication, a logical operation (negation, logical AND, logical OR, exclusive OR), data format conversion (integers and binary digits), and the like can be obtained in a state of being distributed to the three secret calculation device without restoring numerical values.

Meanwhile, when learning a decision tree from a given data set, a method of calculating an evaluation value when the data set is divided at each node by the attribute value of each item of data and adopting division that maximizes the evaluation value has been well known.

[Citation List]

[Non Patent Literature]

[NPL 1] Koji Chida, Koki Hamada, Dai Ikarashi, Katsumi Takahashi, "Reconsideration of Light-Weight Verifiable Three-Party Secret Function Calculation," In CSS, 2010

[Summary of Invention]

[Technical Problem]

However, in a case where learning of a decision tree is performed by secret calculation, the calculation time may increase. For example, in a case where the decision tree is a binary tree having a height of h or less, the number of data classified at each node is hidden in the secret calculation; therefore, the number of times of reference of the data set is $\Theta$ ($2^h$). Therefore, as the height of the decision tree becomes greater, the calculation time required for learning becomes greater.

One embodiment of the present invention was made in view of the above points, and has an object to reduce the calculation time in a case where learning of a decision tree is performed by secret calculation.

[Solution to Problem]

In order to achieve the above object, a secret decision tree learning device according to an embodiment is a secret decision tree learning device for learning a decision tree by secret calculation, that includes an input unit configured to input a data set composed of a plurality of records including one or more attribute values of explanatory variables and attribute values of objective variables; and a learning unit configured to learn the decision tree by collectively dividing the data set at all nodes included in a hierarchical level, for each of a plurality of hierarchical levels of the decision tree.

[Advantageous Effects of Invention]

It is possible to reduce the calculation time in a case where learning of a decision tree is performed by secret calculation.

[Brief Description of Drawings]

[Fig. 1]

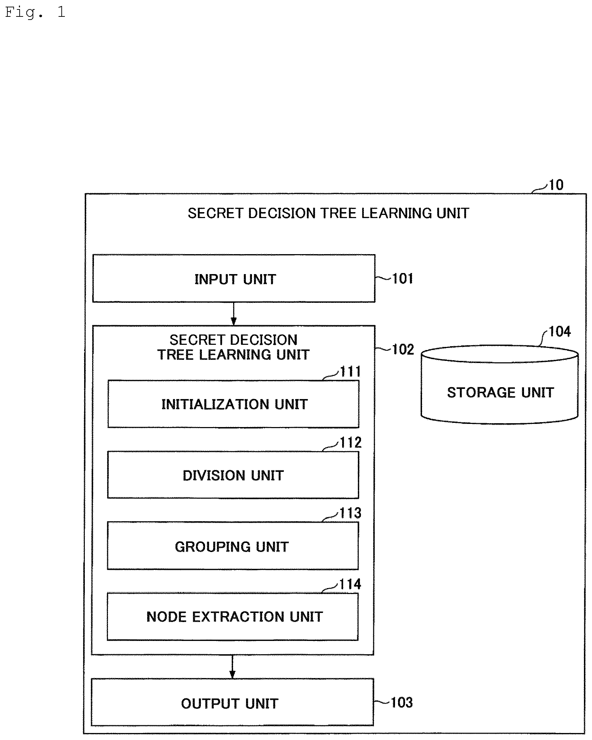

Fig. 1 is a diagram illustrating an example of a functional configuration of a secret decision tree learning device according to a present embodiment.

[Fig. 2]

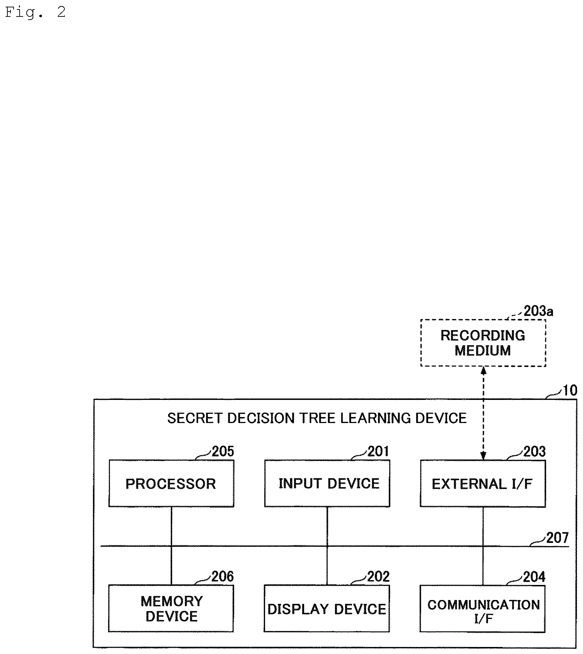

Fig. 2 is a diagram illustrating an example of a hardware configuration of the secret decision tree learning device according to the present embodiment.

[Fig. 3]

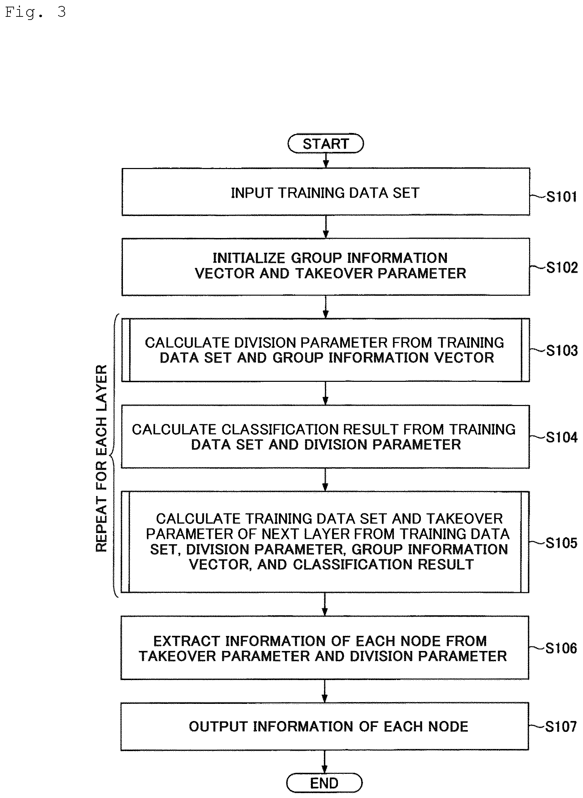

Fig. 3 is a flowchart illustrating an example of a flow of a secret decision tree learning process according to the present embodiment.

[Fig. 4]

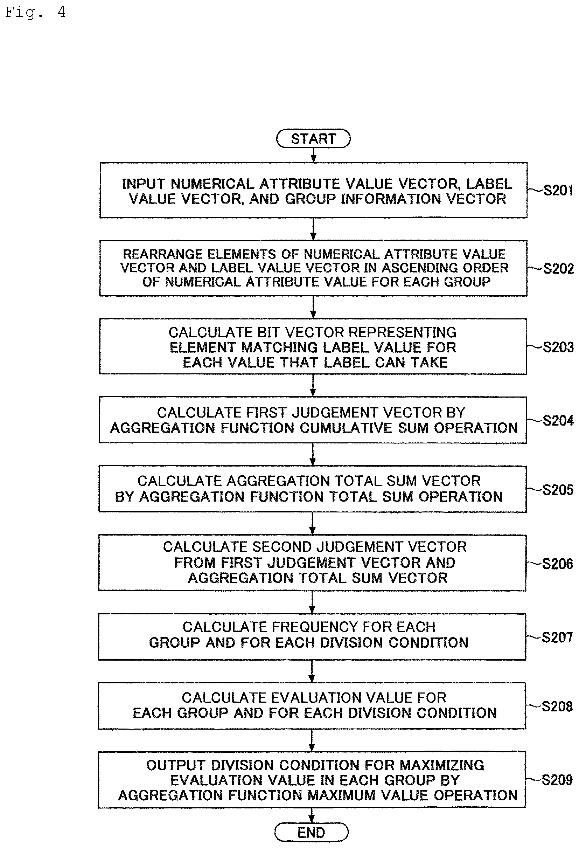

Fig. 4 is a flowchart (part 1) illustrating an illustrating of a flow of a secret decision tree learning process according to the present embodiment.

[Fig. 5]

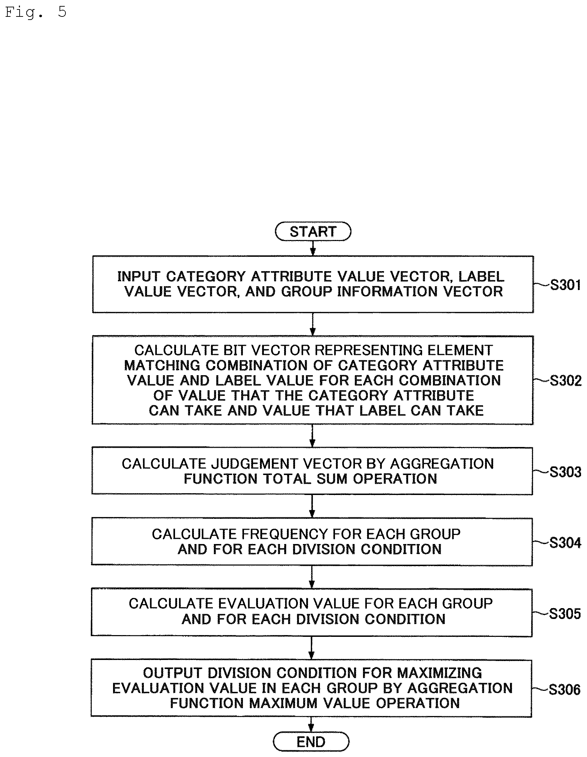

Fig. 5 is a flowchart (part 2) illustrating an example of a flow of a secret decision tree learning process according to the present embodiment.

[Fig. 6]

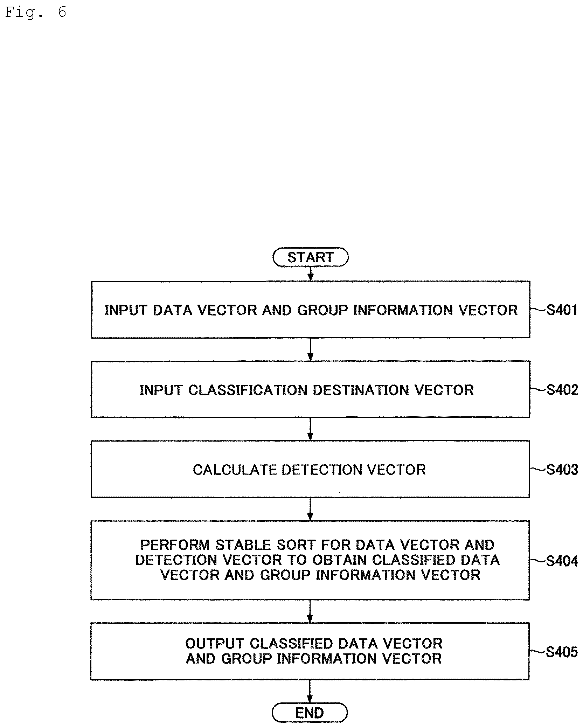

Fig. 6 is a flowchart illustrating an example of a flow of dividing secret group according to the embodiment.

[Description of Embodiments]

An embodiment of the present invention will be described below. In the present embodiment, a secret decision tree learning device 10 capable of efficiently learning a decision tree (that is, learning a decision tree without revealing an input and an output) by secret calculation will be described. As will be described later, the secret decision tree learning device 10 according to the present embodiment utilizes that data items in a given data set are classified among nodes at the same hierarchical level of the decision tree without overlapping one other, performs classification at all nodes at the same hierarchical level in a batch, and thereby, is capable of reducing the number of times of reference to the entire data set exponentially. In the present embodiment, a decision tree in which an input and an output are concealed by using secret calculation is also referred to as a secret decision tree.

<Notation>

First, various notations will be described. Note that notations which are not necessarily used in the present embodiment are also described below.

A value obtained by concealing a certain value a through encryption, secret sharing, or the like is called a secret value of a, and is denoted as [a]. In a case where a is concealed by secret sharing, [a] refers to a set of fragments of secret sharing which are possessed by each secret calculation device.

•Restoration

A process of inputting the secret value [a] of a and calculating a value c having a relation of c = a is denoted as follows:

c←Open([a])

•Arithmetic operations

Operations of addition, subtraction, and multiplication take the secret values [a] and [b] of two values a and b as inputs, and calculate the secret values $[c_1]$, $[c_2]$, and $[c_3]$ of calculation results $c_1$, $c_2$, and $c_3$ of a + b, a - b, and ab. Execution of the operations of addition, subtraction, and multiplication are denoted, respectively, as follows:

$[c_1]$←Add([a], [b])
$[c_2]$←Sub([a], [b])
$[c_3]$←Mul([a], [b])

In a case where there is no concern of misunderstanding, Add([a], [b]), Sub([a], [b]), and Mul([a], [b]) are abbreviated as [a] + [b], [a] - [b], and [a] × [b], respectively.

•Comparison

Operations of comparison take the secret values [a] and [b] of two values a and b as inputs, and calculate the secret values $[c_1]$, $[c_2]$, and $[c_3]$ of a Boolean value c □ {0, 1} of a = b, a ≤ b, and a < b. The Boolean value is 1 when it is true and 0 when it is false. Execution of the comparison operations of a = b, a ≤ b, and a < b are denoted, respectively, as follows:

$[c_1] \leftarrow EQ([a], [b])$
$[c_2] \leftarrow LE([a], [b])$
$[c_3] \leftarrow LT([a], [b])$

•Selection

An operation of selection takes the secret value [c] of a Boolean value c □ {0, 1} and the secret values [a] and [b] of two values a and b as inputs, and calculates the secret value [d] of d satisfying the following formula:

[Math. 1]

$$d = \begin{cases} a & \text{if } c = 1 \\ b & \text{otherwise} \end{cases}$$

The execution of this operation is denoted as follows:
[d]←IfElse([c], [a], [b])
This operation can be implemented as follows:

```
[d]←[c] × ([a] - [b]) + [b]
```

<Decision tree>

A decision tree is a directed graph that expresses knowledge about a certain attribute of data by a combination of rules with a tree structure. In addition, such attributes include an attribute called an objective variable and an attribute called an explanatory variable, and the decision tree uses the attribute value of an explanatory variable as an input and predicts and outputs the attribute value of an objective variable. The decision tree includes one or more nodes, and each node other than a leaf is set with a division rule (division condition) regarding explanatory variables such as, for example, "age is less than 30 years." On the other hand, the attribute value of an objective variable is set in a leaf (that is, a node at an end of the decision tree).

In response to receiving an attribute value of the explanatory variable, the decision tree first determines a division condition at the node of the root, and then, transitions to one of the child nodes in accordance with the determination result of the division condition. Thereafter, determination of a division condition at each node and transition to the child node are recursively repeated, and an attribute value allocated to the finally reached leaf is output as the prediction value of the objective variable.

•Learning algorithm of decision tree

For example, CART, ID3, C4.5, and the like are known as algorithms for learning a decision tree from a set of data composed of explanatory variables and objective variables. Although these algorithms differ in detail, these all learn a decision tree by recursively dividing a data set so as to greedily maximize a certain objective function from the root to the leaves (Steps 1 to 8 to be described later). In addition, an input to the algorithm is a data set Q = (X, y), and an output is a decision tree represented as a directed graph from the root to the leaf. Hereinafter, each item of data included in the data set is also referred to as a record. Note that, for example, the data set may be referred to as "data set for training" or "teaching data set," and each item of data included in the data set may be referred to as "training learning", "teaching data", or the like.

Here, X is a matrix having attribute values of the explanatory variables of each record as elements, and is represented by, for example, a matrix in which the total number of records is the number of rows and the total number of explanatory variables is the number of columns. In addition, y is a vector having attribute values of the objective variables of each record as elements, and is represented by, for example, a vertical vector in which the attribute value of the objective variable of the n-th record of X is an n-th element.

Note that, as described above, a division condition is set at each node other than a leaf of the decision tree, and an attribute value of the objective variable is set at a leaf. In addition, The objective variable is assumed to take a category value, and the explanatory variable is assumed to take a numerical value or a category value, and the response variable is referred to as a label, and its value (attribute value) is also referred to as a label value. In addition, hereinafter, an explanatory variable that takes a category value is also referred to as a category attribute (that is, in a case where it is expressed as a "category attribute", it indicates an explanatory variable that takes a category value), and its value is also referred to as a category attribute value. The decision tree in a case where the objective variable is a numerical value is also called a regression tree.

Step 1: a node v is created.

Step 2: when the end condition of division is satisfied, the attribute value of the objective variable is set at the node v, and output as a leaf, and the process ends. In this case, the attribute value (label value) which is set at the node v is, for example, a value that appears most frequently among the values of the elements included in y. Note that examples of the end condition include all the elements included in y having the same value (that is, all the attribute values of the objective variables being the same), the decision tree having reached a height determined in advance, and the like.

Step 3: when the end condition of division is not satisfied, division conditions $r_1$, $r_2$, $\cdots$ that can be applied to the node v are listed.

Step 4: an evaluation value $s_i$ of each division condition $r_i$ is calculated by the objective function.

Step 5: the division condition r* that takes the maximum evaluation value is selected from a set $\{r_i\}$ of division conditions, and the division condition r* is set at the node v.

Step 6: a data set (X, y) is divided into data sets $(X_1, y_1)$, $(X_2, y_2)$, $\cdots$, $(X_d, y_d)$ on the basis of the division condition r*. In other words, this means that records included in the data set (X, y) are classified into the data sets $(X_1, y_1)$, $(X_2, y_2)$, $\cdots$, $(X_d, y_d)$ on the basis of the division condition r*. Note that d is the number of branches (that is, the number of children held by one node).

Step 7: Steps 1 to 7 are recursively executed for each $(X_j, y_j)$. That is, each $(X_j, y_j)$ is regarded as (X, y), and a function, a method, or the like of executing Steps 1 to 7 is called. Here, when a node v is created in Step 1 executed recursively, a branch is spanned with the node v created in the calling Step 1. Note that the node v created in the calling Step 1 is a parent, and the node v created in the called Step 1 is a child.

Step 8: when the execution of Steps 1 to 7 for all the data sets $(X_j, y_j)$ is ended (that is, the execution of all Steps 1 to 7 called recursively is ended), the set of nodes v (and the division condition r set at each node v) and the set of branches between the nodes are output, and the process ends. The set of these nodes v and the set of branches are the decision tree.

In the present embodiment, evaluation of a division condition at each node in the same hierarchical level (above Step 4 to Step 5) and division of the data set based on the evaluation result (above Step 6) are performed collectively, and these are repeated recursively for each hierarchical level to learn the secret decision tree. Note that a hierarchical level corresponds to a set of nodes having the same depth from the root, and is also simply referred to as a "layer".

•Number of branches

Although the number of branches d can be any integer value greater than or equal to 2, in the present embodiment, a binary tree is assumed and d = 2 is set. Note that, although the present embodiment can also be applied to a case where d is greater than or equal to 3, the calculation time becomes longer as the value of d increases.

Division condition

Any condition for the attribute value of the explanatory variable can be used as the division condition, but in general, conditions such as magnitude comparison or inclusion in a certain set are often used. In the present embodiment, the explanatory variable takes either a numerical value or a category value; therefore, when taking a numerical value, the division condition is based on magnitude comparison with respect to a threshold value (for example C is a threshold value, x is a numerical attribute value of an explanatory variable, and $x \leqq C$, or the like), or when taking a category value, the division condition is based on belonging to a certain set (for example, X is a set, x is a category attribute value, and $x \square X$, or the like). Note that the division condition may be referred to as, for example, a division rule, a classification condition, a classification rule, or the like.

Index of purity

As an index for measuring the quality of division (or classification) when a certain data set is divided into a plurality of data sets (in other words, records included in a certain data set are classified into a plurality of data sets), an index of purity H(·) indicating whether the data set is ambiguous is known. Examples of indexes which are often used include a gini coefficient, entropy, and the like.

In the data set Q, a set of records in which the attribute value (that is, label value) of the objective variable is k is denoted as $Q_k$. In this case, the ratio of records of the label value k at a node with the data set Q as an input is defined as follows:

[Math. 2]

$$p_k := \frac{|Q_k|}{|Q|}$$

In the present embodiment, the following entropy is used as an index of purity.

[Math 3]

$$H(Q) = -\sum_k p_k \log_2 p_k$$

•Objective Function

The quality of each division condition is evaluated by the objective function (that is, the value of the objective function is the evaluation value of the division condition). Examples of the objective function which are often used include an amount of mutual information, a gain factor, and the like.

It is assumed that, denoting a division condition as θ, the data set Q is divided into two data sets Q(θ, 0) and Q(θ, 1), under a certain division condition θ. In this case, GainRatio() defined by the following formula is called a gain factor.

[Math. 4]

$$p_i(Q, \theta) := \frac{|Q(\theta, i)|}{|Q|}$$

$$G(Q, \theta) := \sum_i p_i(Q, \theta) H(Q(\theta, i))$$

$$\mathsf{Gain}(Q, \theta) := H(Q) - G(Q, \theta)$$

$$\mathsf{SplitInfo}(Q, \theta) := -\sum_i p_i(Q, \theta) \log_2 p_i(Q, \theta)$$

$$\mathsf{GainRatio}(Q, \theta) := \frac{\mathsf{Gain}(Q, \theta)}{\mathsf{SplitInfo}(Q, \theta)}$$

In the present embodiment, the gain factor is used as an objective function.

<Calculation of evaluation value>

The division condition of each node is set by selecting such a division condition that a predetermined objective function is maximized at the node. Since it is necessary to calculate the value of the objective function for each candidate for the division condition, it is important to be able to efficiently calculate the value of the objective function for the given division condition.

The gain factor defined by Math. 4 needs to be calculated intricately to obtain the frequency of the value of each label (the value of the objective variable) after the division has been performed actually. Consequently, in the present embodiment, a method of calculating a gain factor is reformulated and simplified so that the gain factor can be collectively calculated for a plurality of division conditions by secret calculation.

In order to simplify the calculation of the gain factor, attention is focused on many ratios being required for the gain factor. Since a ratio requires division, the calculation cost is increased when the calculation is performed as it is; however, it can be converted into a statistic easy to calculate such as frequency by multiplying by the total number. Based on this observation, in the present embodiment, the functions of SplitInfo$^+$, H$^+$, Gain$^+$, and G$^+$ multiplied by the size of the input data set are used instead of the functions of SplitInfo, H, Gain, and G.

For simplicity, when using the following formula,

[Math. 5]

$$f(x) := x \log_2 x$$

SplitInfo$^+$ can be reformulated as follows:

[Math. 6]

$$
\begin{aligned}
\text{SplitInfo}^+(Q, \theta) \quad &:= \quad |Q|\, \text{SplitInfo}(Q, \theta) \\
&= \quad -\sum_i |Q(\theta, i)| \log_2(|Q(\theta, i)|/|Q|) \\
&= \quad -\sum_i |Q(\theta, i)|(\log_2 |Q(\theta, i)| - \log_2 |Q|) \\
&= \quad |Q| \log_2 |Q| - \sum_i |Q(\theta, i)| \log_2 |Q(\theta, i)| \\
&= \quad f(|Q|) - \sum_i f(|Q(\theta, i)|)
\end{aligned}
$$

Similarly, H$^+$ can be reformulated as follows:

[Math. 7]

$$
\begin{aligned}
H^+(Q) &:= |Q|H(Q) \\
&= -|Q|\sum_k p_k \log_2 p_k \\
&= -\sum_k |Q_k|(\log_2 |Q_k| - \log_2 |Q|) \\
&= |Q|\log_2 |Q| - \sum_k |Q_k|\log_2 |Q_k| \\
&= f(|Q|) - \sum_k f(|Q_k|)
\end{aligned}
$$

Similarly, $G^+$ can be reformulated as follows:

[Math. 8]

$$
\begin{aligned}
G^+(Q,\theta) &:= |Q|\sum_i p_i(Q,\theta)H(Q(\theta,i)) \\
&= \sum_i |Q(\theta,i)|H(Q(\theta,i)) \\
&= \sum_i H^+(Q(\theta,i))
\end{aligned}
$$

In addition, similarly, Gain$^+$ can be reformulated as follows:

[Math. 9]

$$
\begin{aligned}
\mathbf{Gain}^+(Q,\theta) &:= |Q|\,\mathbf{Gain}(Q,\theta) \\
&= |Q|H(Q) - |Q|G(Q,\theta) \\
&= H^+(Q) - G^+(Q,\theta)
\end{aligned}
$$

All the above functions of SplitInfo$^+$, H$^+$, Gain$^+$, and G$^+$ are composed of a frequency such as the number of records included in the data set Q or the number of records satisfying a certain condition in the data set Q, f(·), and addition/subtraction. Since GainRatio is as follows,

[Math. 10]

$$\text{GainRatio}(Q, \theta) = \frac{|Q|\,\text{Gain}(Q, \theta)}{|Q|\,\text{SplitInfo}(Q, \theta)} = \frac{\text{Gain}^+(Q, \theta)}{\text{SplitInfo}^+(Q, \theta)}$$

it can be understood that the numerator and denominator of GainRatio of the division condition $\theta$ for the data set Q can be ultimately calculated by the following four quantities:

(1) the number of records $|Q|$ of Q;
(2) the number of records $|Q_k|$ of a label value k in Q;
(3) the number of records $|Q(\theta, i)|$ of each item of data set obtained by dividing Q by $\theta$; and
(4) the number of records $|Q(\theta, i)_k|$ of the label value k in each item of data set obtained by dividing Q by $\theta$,

together with f($\cdot$) and addition/subtraction.

The input of f($\cdot$) is one of the above-described four frequencies (the numbers of records $|Q|$, $|Q_k|$, $|Q(\theta, i)|$, and $|Q(\theta, i)_k|$). Therefore, in a case where the number of records of the data set given as data set for learning is n, the input of f($\cdot$) is always an integer equal to or greater than 0 and equal to or less than n. Thus, in a case where concealment is performed by secret sharing, f($\cdot$) can implements $\Theta(n)$ calculations of f($\cdot$) with the amount of communication of O(nlogn) by using a secret batch mapping using a correspondence table (look-up table) listing the following correspondence of the magnitude $\Theta(n)$.

[Math. 11]

$$[0, n] \ni x \mapsto x \log x$$

Thereby, in the present embodiment, by calculating each frequency at each node when learning the secret decision tree, it is possible to collectively calculate the evaluation values (GainRatio) of a plurality of division conditions at each node.

In addition, the result of comparison of two values (a, b) and (c, d) given as a pair of a numerator and a denominator being non-negative is equal to the result of comparison of ad and bc. Since both the numerator and denominator of GainRatio are non-negative, division is avoided by substituting the above method when the comparison of GainRatio (that is, comparison of the evaluation values) is performed. Thereby, it is possible to reduce the calculation time required for the comparison of the evaluation values for selecting the division condition for taking the maximum evaluation value.

<Functional configuration>

Next, a functional configuration of the secret decision tree learning device 10 according to the present embodiment will be described with reference to Fig. 1. Fig. 1 is a diagram illustrating an example of the functional configuration of the secret decision tree learning device 10 according to the present embodiment.

As shown in Fig. 1, the secret decision tree learning device 10 according to the present embodiment includes an input unit 101, a secret decision tree learning unit 102, an output unit 103, and a storage unit 104.

The storage unit 104 stores various types of data (that is, various types of concealed data) for learning the secret decision tree is stored. Here, the various types of data includes a data set given as a training data set (referred to the training data set, below). The training data set is composed of a vector having values of the explanatory variables of records as elements and a vector having label values of records as elements. Specifically, for example, assuming that the number of records constituting the training data set is n and the total number of explanatory variables is m-1, the training data set is data represented by a matrix of n rows and m columns.

The various types of data stored in the storage unit 104 include a group information vector representing which node a record under learning of the secret decision tree is classified into (that is, a group) and the like.

The input unit 101 inputs the training data set for learning the secret decision tree.

The secret decision tree learning unit 102 learns the secret decision tree by recursively repeating, for each layer, evaluation (test) of the division condition at nodes of the same layer and division of the data set based on the evaluation result (that is, classification of records constituting the data set) collectively by using the training data set and the group information vector. Here, the secret decision tree learning unit 102 includes an initialization unit 111, a division unit 112, a grouping unit 113, and a node extraction unit 114.

The initialization unit 111 initializes various types of data such as the group information vector when learning the secret decision tree. The division unit 112 collectively performs evaluation (test) of the division condition at nodes of the same layer and the division of the data set based on the evaluation result (that is, classification of records constituting the data set). The grouping unit 113 calculates the training data set, the group information vector and the like used for the evaluation of the division conditions at each node of the next layer and the division of the data set based on the evaluation result by using the classification result of the record by the division unit 112. The node extraction unit 114 extracts information of each node constituting the finally outputted secret decision tree.

The output unit 103 outputs the secret decision tree learned by the secret decision tree learning unit 102. The output unit 103 may output the secret decision tree (more correctly, data representing the information of each node constituting the secret decision tree) to a predetermined arbitrary output destination (for example, the storage unit 104 or the like).

<Hardware Configuration>

Next, a hardware configuration of the secret decision tree learning device 10 according to the present embodiment will be described with reference to Fig. 2. Fig. 2 is a diagram illustrating an example of the hardware configuration of the secret decision tree learning device 10 according to the present embodiment.

As shown in Fig. 2, the secret decision tree learning device 10 according to the present embodiment is implemented by the hardware configuration of a general computer or a computer system and includes an input device 201, a display device 202, an external I/F 203, a communication I/F 204, a processor 205, and a memory device 206. These components of hardware are communicably connected to each other through a bus 207.

The input device 201 is, for example, a keyboard, a mouse, a touch panel, or the like. The display device 202 is, for example, a display or the like. Note that the secret decision tree learning device 10 may not include at least one of the input device 201 and the display device 202.

The external I/F 203 is an interface with an external device such as a recording medium 203a. The secret decision tree learning device 10 can execute reading, writing, or the like on the recording medium 203a through the external I/F 203. The recording medium 203a may store, for example, one or more programs for implementing the respective functional units of the secret decision tree learning device 10 (the input unit 101, the secret decision tree learning unit 102, and the output unit 103).

Note that examples of the recording medium 203a include a compact disc (CD), a digital versatile disk (DVD), a secure digital (SD) memory card, a universal serial bus (USB) memory card, and the like.

The communication I/F 204 is an interface for connecting the secret decision tree learning device 10 to the communication network. Note that one or more programs that implements the respective function units of the secret decision tree learning device 10 may be acquired (downloaded) from a predetermined server device or the like via the communication I/F 204.

Examples of the processor 205 include various computing devices such as a CPU (Central Processing Unit) and a GPU (Graphics Processing Unit). Each function unit included in the secret decision tree learning device 10 is implemented, for example, by processing caused by one or more programs stored in the memory device 206 to be executed by the processor 205.

The memory device 206 is any of various storage devices such as an HDD (Hard Disk Drive), an SSD (Solid State Drive), a RAM (Random Access Memory), a ROM (Read Only Memory), and a flash memory, and the like. The storage unit 104 of the secret decision tree learning device 10 can be implemented by using, e.g., the memory device 206. Note that the storage unit 104 may also be implemented by using, for example, a storage device connected to the secret decision tree learning device 10 via the communication network or the like.

The secret decision tree learning device 10 according to the present embodiment can implement the above described various processing by having the hardware configuration shown in Fig. 2. Note that the hardware configuration shown in Fig. 2 is an example, and the secret decision tree learning device 10 may have other hardware configurations. For example, the secret decision tree learning device 10 may include a plurality of processors 205 or may include a plurality of memory devices 206.

<Secret decision tree learning process>

Next, a secret decision tree learning process for learning a secret decision tree from a given training data set will be described with referring to Fig. 3. Fig. 3 is a flowchart illustrating an example of a flow of the secret decision tree learning process according to the present embodiment. In the following, it is assumed that a d-branched tree having a height of h or less is learned.

First, the input unit 101 inputs the training data set for learning the secret decision tree (Step S101). Here, as an example, the training data set Q is data represented by the matrix of n rows and m columns, where the number of records is n and the total number of explanatory variables is m-1, and $[T_1]:= [Q]$ is defined.

Next, the initialization unit 111 of the secret decision tree learning unit 102 initializes a group information vector $[g_1]$ and a takeover parameter $[q_1]$ as follows (Step S102).

$$[g_1]:= (0, 0, ..., 1)^T$$

$$[q_1]:= (0, ..., 0)^T$$

Note that the group information vector and the takeover parameter are vectors having the number of elements of N. In addition, T denotes a symbol denoting transposition.

Here, the group information vector is a vector indicating which group records of the training data set are classified into, and when a certain group of consecutive records is classified into the same group, the element of the position corresponding to a record at the end of the record group is set to 1 and the other elements are set to 0. For example, the above described group information vector $[g_1]$ indicates that all records of the training data set $[T_1]$ are classified into the same group. This means that all the records are classified into the same group at the node of the root.

Further, the takeover parameter is a vector whose elements are numbers of nodes into which records are classified in each hierarchical level, and for i= 1, ..., h, the n-th element of the takeover parameter $[q_i]$ indicates the number of the node in which the n-th record of the training data set $[T_i]$ is classified. For example, the above described takeover parameter $[q_1]$ indicates that all records of the training data set $[T_1]$ are classified into the node having a number "0" (that is, the root).

The following Steps S103 to S105 are repeatedly performed for every layer i= 1, ..., h. Hereinafter, Steps S103 to S105 in a certain layer i will be described.

The division unit 112 of the secret decision tree learning unit 102 calculates a division parameter $[p_i]$ from the training data set $[T_i]$ and the group information vector $[g_i]$ (Step S103). The process in Step S103 is a process for performing the evaluation (the test) of division conditions at each node of the layer i, and the division condition is set to each node of the layer i (however, except for the leaf) by the process. Note that details of the process will be described later.

Here, the division parameter $[p_i]$ is data including a secret value of information necessary for calculating a classification result ($[f_i]$, which will be described later) at each node of the secret decision tree, and for example, the secret value of information such as the following (a) to (d) is included for each node of layer i.

    (a) For which explanatory variable, the division condition is determined
    (b) for the explanatory variable, what type of division condition is to be determined (for example, a division condition representing magnitude comparison with a threshold value, a division condition representing whether or not the explanatory variable belongs to a certain set, and the like)
    (c) a threshold value or set used for the division condition
    (d) a label value to be set when the node is a leaf That is, the division parameter $[p_i]$ includes information on the division condition (or the label value when the node is a leaf) set for each node of the layer i.

Next, the division unit 112 of the secret decision tree learning unit 102 calculates a classification result $[f_i]$ from the training data set $[T_i]$ and the division parameter $[p_i]$ (Step S104). Here, the classification result $[f_i]$ is information representing the result of classifying the training data set $[T_i]$ by the division condition set in Step S103 (that is, classifying records constituting the training data set $[T_i]$), for example, a vector whose elements are numbers indicating classification destinations of the records (the numbers of 0 or greater and d-1 or less) and the like. For example, in the case of d = 2, the division unit 112 extracts the attribute values of the explanatory variable indicated by the above-mentioned (a) from the training data set $[T_i]$, and then, determines whether or not each of the attribute values satisfies a condition determined by the above-mentioned (b) and (c), and calculates the classification result $[f_i]$ by setting the j-th element to be 1 and otherwise 0 if the attribute value of the j-th ($1 \leq j \leq n$) record satisfies the condition.

Next, the grouping unit 113 of the secret decision tree learning unit 102 calculates a training data set $[T_{i+1}]$, a takeover parameter $[q_{i+1}]$, and a group information vector $[g_{i+1}]$ of the next layer i+1 from the training data set $[T_i]$, the takeover parameter $[q_i]$, the group information vector $[g_i]$, and the classification result $[f_i]$ (Step S105). At this time, the grouping unit 113 rearranges the data set ($[T_i]$, $[q_i]xd+[f_i]$) obtained by concatenating $[T_i]$ and $[q_i]xd+[f_i]$ in accordance

with $[g_i]$ and $[f_i]$, to calculate the rearrangement result $([T_{i+1}], [q_{i+1}])$ and $[g_{i+1}]$ representing which group each record of $[T_{i+1}]$ is classified into. Note that $[q_i] \times d + [f_i]$ corresponds to $[q_{i+1}]$ before the rearrangement. This means that, as each element of $[f_i]$ has a value of 0 or greater and d-1 or less, the value of each element of $[q_i]$ (that is, the number of the node) is renumbered to a different number for each element of $[f_i]$, to assign a number for each node in the i+1 layer.

The process in Step S105 is a process for grouping records of the training data set $[T_i]$ into smaller groups according to the classification result $[f_i]$ obtained in Step S104, and by this process, the training data set $[T_{i+1}]$, and the takeover parameter $[q_{i+1}]$, and the group information vector $[g_{i+1}]$ of the next layer i+1 are calculated. Note that details of the process will be described later.

Subsequently, when Step S103 to Step S105 are executed for i=1, ..., h, the node extraction unit 114 of the secret decision tree learning unit 102 extracts information of nodes from the respective takeover parameters $[q_i]$ and division parameters $[p_i]$ (Step S106). As described above, the node numbers in which the respective records of the node $[T_i]$ are classified are stored in $[q_i]$. On the other hand, the information indicated by the above-mentioned (a) to (d) is stored in $[p_i]$. For this reason, the node extraction unit 114 may extract, for example, information on (a) to (d) of a node corresponding to the value for each different value among the values taken by the respective elements of $[q_i]$.

Then, the output unit 103 outputs the information extracted in Step S106 (that is, the information of each node constituting the secret decision tree) (Step S107).

<Secret Decision Tree test Process (part 1)>

Next, an example of the process in Step S103 will be described with reference to Fig. 4. Fig. 4 is a flowchart (part 1) illustrating an example of a flow of the secret decision tree test process according to the present embodiment. In the following description, as an example, a case will be described where evaluation (test) of the division conditions are performed at the respective nodes constituting a layer i for a certain numerical attribute as an object. Further, a vector in which the numerical attribute values of the respective records in the training data set $[T_i]$ are arranged in the order of records is called a numerical attribute value vector, and a vector in which the label values are arranged in the order of records is called a label value vector. In addition, a set of values that a label can take is assumed to be {1, 2, 3}.

First, the division unit 112 inputs the numerical attribute value vector, the label value vector, and the group information vector (Step S201). In the following, as an example, the group information vector is assumed to be as follows:

$$[g] = [g_i] = (0, 0, 1, 1, 0, 0, 0, 1, 0, 1)^T$$

The above mentioned [g] indicates that the first record to the third record in the training data set $[T_i]$ belong to the first group, the fourth record belongs to the second group, the fifth record to the eighth record belong to the third group, and the ninth record to the tenth record belong to the fourth group.

Next, the division unit 112 rearranges the elements of the numerical attribute value vector and the label value vector in ascending order in the same group for each group (Step S202). That is, the division unit 112 rearranges the elements of the numerical attribute value vector and the label value vector in ascending order in each group of the first group to the fourth group. In the following, as an example, this numerical attribute value vector after rearrangement is assumed to be as follows:

$$[c] = (1, 2, 5, 2, 3, 4, 5, 7, 2, 4)^T$$

In addition, the label value vector after the rearrangement is assumed to be as follows:

$$[y] = (3, 2, 1, 3, 2, 1, 1, 3, 1, 2)^T$$

In the following, it is assumed that the numerical attribute value vector and the label value vector indicate the rearranged numerical attribute value vector and the label value vector.

Next, the division unit 112 calculates a bit vector representing the position of an element matching the label value among elements of the label value vector [y] for each value that the label can take (Step S203).

Denoting bit vectors corresponding to values "1", "2" and "3" which the label can take as $[f_1]$, $[f_2]$, and $[f_3]$, these bit vectors are represented as follows, respectively.

$$[f_1] = (0, 0, 1, 0, 0, 1, 1, 0, 1, 0)^T$$

$$[f_2] = (0,\ 1,\ 0,\ 0,\ 1,\ 0,\ 0,\ 0,\ 0,\ 1)^T$$

$$[f_3] = (1,\ 0,\ 0,\ 1,\ 0,\ 0,\ 0,\ 1,\ 0,\ 0)^T$$

That is, the bit vector corresponding to a certain label value is a vector in which only an element at the same position as an element matching the label value among elements of the label value vector is set to 1, and the other elements are set to 0.

Next, the division unit 112 performs an aggregation function cumulative sum operation according to grouping by the group information vector [g] for each bit vector, to calculate a first determination vector (Step S204). Here, the aggregation function cumulative sum operation is an operation of inputting a set of elements in the same group and outputting a set of cumulative sums of values of the elements. In other words, the aggregation function cumulative sum operation is an operation of calculating the cumulative sum from the head for each element in the same group.

For example, for each bit vector, the division unit 112 sequentially calculates a cumulative sum of the first to third elements, similarly calculates a cumulative sum of the fourth element, sequentially calculates a cumulative sum of the fifth to eighth elements, and sequentially calculates a cumulative sum of the ninth to tenth elements.

Thus, a first determination vector corresponding to the bit vector [f_i]

$$[s_{0,1}] = (0,\ 0,\ 1,\ 0,\ 0,\ 1,\ 2,\ 2,\ 1,\ 1)^T$$

is obtained.

Similarly, a first determination vector corresponding to the bit vector [f_2]

$$[s_{0,2}] = (0,\ 1,\ 1,\ 0,\ 1,\ 1,\ 1,\ 1,\ 0,\ 1)^T$$

is obtained.

Similarly, a first determination vector corresponding to the bit vector [f_3]

$$[s_{0,3}] = (1,\ 1,\ 1,\ 1,\ 0,\ 0,\ 0,\ 1,\ 0,\ 0)^T$$

is obtained.

When a threshold value is set immediately after each numerical attribute value in each group (that is, between the numerical attribute value and the next greatest numerical attribute value), the first determination vector indicates the number (frequency) of numerical attribute values being less than or equal to the threshold value and having a corresponding label value. For example, when the threshold value is set immediately after the first element of the first group of the numerical attribute value vector [c], the first determination vector $[s_{0,1}]$ indicate that the number of numerical attribute values being less than or equal to the threshold value and having a level value of 1 is 0. Similarly, for example, when the threshold value is set immediately after the third element of the first group, it indicates that the number of numerical attribute values being less than or equal to the threshold value and having a level value of 1 is 1.

Therefore, by the first determination vectors described above, it is possible to calculate the frequency of records taking a label value k in the data set satisfying the division condition among data sets (sets of numerical attribute values) divided (grouped) by the division condition expressed in a form of $x \leq C$ (where C is a threshold value).

Next, the division unit 112 performs the aggregation function total sum operation according to grouping by the group information vector [g] for each bit vector, to calculate an aggregation total sum vector (Step S205). Here, the aggregation function summation operation is an operation of inputting a set of elements in the same group and outputting the total sum of the values of the elements.

For example, the division unit 112 calculates a total sum of the first to third elements, similarly calculates a total sum of the fourth element, calculates a total sum of the fifth to eighth elements, and calculates a total sum of the ninth to tenth elements for each bit vector. Then, the division unit 112 creates an aggregation total sum vector by setting each total sum as an element at the same position as an element that is a calculation source of the total sum.

Thus, an aggregation total sum vector corresponding to the bit vector [f_1] is obtained as follow:

$$[s_{*,1}] = (1,\ 1,\ 1,\ 0,\ 2,\ 2,\ 2,\ 2,\ 1,\ 1)^T$$

Similarly, an aggregation total sum vector corresponding to the bit vector [f_2] is obtained as follow:

$$[s_{*,2}] = (1, 1, 1, 0, 1, 1, 1, 1, 1, 1)^T$$

Similarly, an aggregation total sum vector corresponding to the bit vector [f_3] is obtained as follow:

$$[s_{*,3}] = (1, 1, 1, 1, 1, 1, 1, 1, 0, 0)^T$$

Next, the division unit 112 calculates a second determination vector corresponding to the label value by using the first determination vector and the aggregation total sum vector corresponding to the same label value (Step S206). The division unit 112 calculates the second determination vector by subtracting the first determination vector from the aggregation total sum vector by using the first determination vector and the aggregation total sum vector corresponding to the same label value.

Thus, the second determination vector corresponding to the label value "1" is obtained as follows:

$$[s_{1,1}] = [s_{*,1}] - [s_{0,1}] = (1, 1, 0, 0, 2, 1, 0, 0, 0, 0)^T$$

Similarly, the second determination vector corresponding to the label value "2" is obtained as follows:

$$[s_{1,2}] = [s_{*,2}] - [s_{0,2}] = (1, 0, 0, 0, 0, 0, 0, 0, 1, 0)^T$$

Similarly, the second determination vector corresponding to the label value "3" is obtained as follows:

$$[s_{1,3}] = [s_{*,3}] - [s_{0,3}] = (0, 0, 0, 0, 1, 1, 1, 0, 0, 0)^T$$

When the threshold value is set immediately after each numerical attribute value in each group (that is, between the numerical attribute value and the next greatest numerical attribute value), the second determination vector indicates the number (frequency) of numerical attribute values being greater than the threshold value and having a corresponding label value. For example, when the threshold is set immediately after the first element of the first group of the numerical attribute value vector [c], the second determination vector $[s_{1,1}]$ indicates that the number of numerical attribute values being greater than the threshold value and having a level value of 1 is 1. Similarly, for example, when the threshold value is set immediately after the third element of the first group, it indicates that the number of numerical attribute values being greater than the threshold value and having a level value of 1 is 0.

Therefore, by the second determination vectors, it is possible to calculate the frequency of records taking the label value k in the data set not satisfying the division condition among the data set (the set of numerical attribute values) divided (grouped) by the division condition expressed in the form of $x \leq C$ (where C is the threshold value).

Next, the division unit 112 calculates each frequency for each group and for each division condition (Step S207). Here, the division unit 112 calculates the following four frequencies:

the number of elements in each group of the numerical attribute value vector [c] (that is, |Q| shown in the above (1));
the number of elements of the label value k in each group of the numerical attribute value vector [c] (that is, $|Q_k|$ shown in the above (2));
the number of elements in each group obtained by dividing the group of the numerical attribute value vector [c] by the division condition θ (that is, $|Q(\theta, i)|$ shown in the above (3)); and
the number of elements of the label value k in each group obtained by dividing the group of the numerical attribute value vector [c] by the division condition θ (that is, $|Q(\theta, i)_k|$ shown in the above (4)).

Among these four frequencies, the first frequency is obtained by calculating the number of elements for each group using the numerical attribute value vector [c] and the group information vector [g]. In addition, the second frequency is obtained by calculating the number of elements for each group and for each label value using the numerical attribute value vector [c], the label value vector [y], and the group information vector [g]. In addition, the third frequency is obtained by calculating the number of elements of each set (that is, a set satisfying the division condition θ or a set not satisfying it) divided by the division condition θ when the threshold value of the division condition θ is set in the group by using the numerical attribute value vector [c] and the group information vector [g].

Meanwhile, the fourth frequency is obtained by calculating the number of elements taking the label value k in each set divided by the division condition θ in the group when the threshold value of the division condition θ is set in the group by using the numerical attribute value vector [c], the group information vector [g], the first determination vector, and the second determination vector. As described above, the number of elements taking the label value k in the set satisfying the division condition θ among the respective sets after division is calculated by the first determination vector corresponding to the label value k, and the number of elements taking the label value k in the set not satisfying the division condition θ is calculated by the second determination vector corresponding to the label value k.

Then, the division unit 112 calculates the evaluation value of the division condition for each group and for each division condition by the above mentioned Math. 10 by using each frequency calculated in Step S207 (Step S208).

Then, the division unit 112 selects a division condition that maximizes the evaluation value in each group, and outputs the selected division condition as the division condition set to the node corresponding to the group (Step S209). Note that when selecting the division condition that maximizes the evaluation value in each group, for example, an aggregation function maximum value operation may be performed. The aggregation function maximum value operation is an operation of inputting elements (evaluation values) in the same group and outputting the maximum value among the values of the elements.

Thus, the information of (a) to (c) related to the nodes other than the leaves of the layer i is obtained. Meanwhile, when all the label values in a certain group are the same as a result of inputting the numerical attribute value vector, the label value vector, and the group information vector in Step S201, the node corresponding to the group becomes a leaf, and information of (a) and (d) is obtained.

<Secret Decision Tree test Process (part 2)>

Next, an example of the process in Step S103 will be described with reference to Fig. 5. Fig. 5 is a flow chart (part 2) illustrating an example of the flow of the secret decision tree test process according to the present embodiment. In the following description, as an example, a case will be described in which the evaluation (test) of the division condition is performed at each node constituting a layer i for a certain category attribute as an object. A vector obtained by arranging the category attribute values of the respective records in the training data set $[T_i]$ in the order of records is referred to as a category attribute value vector, and a vector obtained by similarly arranging the label values in the order of records is referred to as a label value vector. In addition, it is assumed that a set of values that can be taken by the category attribute is {5, 6, 7, 8} and a set of values that can be taken by the label is {1, 2, 3}.

First, the division unit 112 inputs the category attribute value vector, the label value vector, and the group information vector (Step S301). In the following, as an example, the group information vector is as follows:

$$[g] = [g_i] = (0, 0, 1, 1, 0, 0, 0, 1, 0, 1)^T.$$

In addition, the category attribute value vector is assumed to be as follows:

$$[c] = (5, 5, 6, 8, 5, 8, 5, 7, 6, 5)^T$$

The label value vector is assumed to be as follows:

$$[y] = (3, 2, 1, 3, 2, 1, 1, 3, 1, 2)^T$$

Next, the division unit 112 calculates, for each combination of a value that the category attribute can take and a value that the label can take, a bit vector representing the position of an element matching the combination of the category attribute value and the label value (step S302).

For example, when a bit vector corresponding to a combination of a value "5" that can be taken by the category attribute and a value "1" that can be taken by the label is $[f_{5,1}]$, this bit vector $[f_{5,1}]$ is as follows:

$$[f_{5,1}] = (0, 0, 0, 0, 0, 0, 1, 0, 0, 0)^T$$

Similarly, for example, when a bit vector corresponding to a combination of the value "5" that can be taken by the category attribute and a value "2" that can be taken by the label is $[f_{5,2}]$, this bit vector $[f_{5,2}]$ is as follows:

$$[f_{5,\,2}] = (0,\ 1,\ 0,\ 0,\ 1,\ 0,\ 0,\ 0,\ 0,\ 1)^T$$

Similarly, for example, when a bit vector corresponding to a combination of the value "5" that can be taken by the category attribute and a value "3" that can be taken by the label is $[f_{5,\,3}]$, this bit vector $[f_{5,\,3}]$ is as follows:

$$[f_{5,\,3}] = (1,\ 0,\ 0,\ 0,\ 0,\ 0,\ 0,\ 0,\ 0,\ 0)^T$$

Bit vectors $[f_{6,\,1}]$ to $[f_{6,\,3}]$, $[f_{7,\,1}]$ to $[f_{7,\,3}]$, and $[f_{8,\,1}]$ to $[f_{8,\,3}]$ corresponding to the other combinations are calculated in the same way.

That is, a bit vector corresponding to a combination of a certain category attribute value and the label value is a vector in which only elements at the position of a combination matching the combination of the category attribute value and the label value among the combinations of elements at the same position in the category attribute value vector and the label value vector are 1 and the other elements are 0.

Next, the division unit 112 performs an aggregation function total sum operation in accordance with grouping based on the group information vector [g] for each bit vector, and calculates a determination vector (Step S303).

For example, the division unit 112 calculates the total sum of the first to third elements for each bit vector, calculates the total sum of the fourth element in the same way, calculates the total sum of the fifth to eighth elements, and calculates the total sum of the ninth to tenth elements. Then, the division unit 112 creates a determination vector by setting each total sum to be an element at the same position as an element which is a calculation source of the total sum.

Thereby, the following determination vector corresponding to the bit vector $[f_{5,\,1}]$ is obtained as follows:

$$[c_{5,\,1}] = (0,\ 0,\ 0,\ 0,\ 1,\ 1,\ 1,\ 1,\ 0,\ 0)^T$$

Similarly, the following determination vector corresponding to the bit vector $[f_{5,\,2}]$ is obtained as follows:

$$[c_{5,\,2}] = (1,\ 1,\ 1,\ 0,\ 1,\ 1,\ 1,\ 1,\ 1,\ 1)^T$$

Similarly, the following determination vector corresponding to the bit vector $[f_{5,\,3}]$ is obtained as follows:

$$[c_{5,\,3}] = (1,\ 1,\ 1,\ 0,\ 0,\ 0,\ 0,\ 0,\ 0,\ 0)^T$$

Determination vectors corresponding to the other bit vectors $[f_{6,\,1}]$ to $[f_{6,\,3}]$, $[f_{7,\,1}]$ to $[f_{7,\,3}]$, and $[f_{8,\,1}]$ to $[f_{8,\,3}]$ are calculated in the same way.

The above determination vectors represent the number of times a combination of the category attribute value and the label value corresponding to the bit vector appears in each group. For example, the combination of (category attribute value, label value) = (5, 1) indicates that it appears 0 times in the first group, 0 times in the second group, one time in the third group, and 0 times in the fourth group. Similarly, for example, the combination of (category attribute value, label value) = (5, 2) indicates that it appears one time in the first group, 0 times in the second group, one time in the third group, and one time in the fourth group.

Therefore, from the above determination vectors, it is possible to calculate the frequency of records that take the label value k in the data set satisfying the division condition among the data sets (sets of category attribute values) divided (grouped) in the division condition expressed by the form of x □ X (where X is a subset of the set of values that can be taken by the category attribute).

Next, the division unit 112 calculates each frequency for each group and for each division condition (Step S304). Here, the division unit 112 calculates the following four frequencies:

the number of elements in each group of the category attribute value vector [c] (that is, $|Q|$ shown in the above (1));
the number of elements of the label value k in each group of the category attribute value vector [c] (that is, $|Q_k|$ shown in the above (2));
the number of elements in each group obtained by dividing the group of the category attribute value vector [c] by the division condition $\theta$ (that is, $|Q(\theta,\ i)|$ shown in the above (3)); and
the number of elements of the label value k in each group obtained by dividing the group of the category attribute value vector [c] by the division condition $\theta$ (that is, $|Q(\theta,\ i)_k|$ shown in the above (4)).

Among these four frequencies, the first frequency is obtained by calculating the number of elements for each group using the category attribute value vector [c] and the group information vector [g]. In addition, the second frequency is obtained by calculating the number of elements for each group and for each label value using the category attribute value vector [c], the label value vector [y], and the group information vector [g]. In addition, the third frequency is obtained by calculating the number of elements of each set (that is, a set satisfying the division condition θ or a set not satisfying it) divided by the division condition θ when the group is divided by the division condition θ using the category attribute value vector [c] and the group information vector [g].

Meanwhile, the fourth frequency is obtained by calculating the number of elements taking the label value k in each set divided by the division condition θ when the group is divided by the division condition θ using the category attribute value vector [c], the group information vector [g], and the determination vector. This may be calculated by the determination vectors counting the number of times a combination of each element (category attribute value) included in the divided set and the label value k appears in the divided group. Specifically, for example, in a case where the division condition θ is x □ {5, 8}, the third group of the category attribute value vector [c] is divided into {5, 8, 5} and {7}. Therefore, for example, as described above, the number of elements taking the label value k in {5, 8, 5} is obtained by calculating the sum of the number of times a combination of (5, k) appears in the third group and the number of times a combination of (8, k) appears in the third group from the determination vectors $[f_{5, k}]$ and $[f_{8, k}]$. Similarly, for example, the number of elements taking the label value k in {7} is obtained by calculating the number of times a combination of (7, k) appears in the third group from the determination vector $[f_{7, k}]$.

Then, the division unit 112 calculates the evaluation value of the division condition on the basis of Math. 10 for each group and for each division condition using each frequency calculated in Step S304 (Step S305).

Then, the division unit 112 selects a division condition that maximizes the evaluation value in each group, and outputs the selected division condition as the division condition set at a node corresponding to the group (Step S306).

Thus, the information of (a) to (c) related to the nodes other than the leaves of the layer i is obtained. Meanwhile, when all the label values in a certain group are the same as a result of inputting the numerical attribute value vector, the label value vector, and the group information vector in Step S301, the node corresponding to the group becomes a leaf, and information of (a) and (d) is obtained.

<Secret Grouping Process>

Next, referring to Fig. 6, an example of details of the process in Step S105 described above will be described. Fig. 6 is a flowchart illustrating an example of a flow of the secret grouping process according to the present embodiment. In the following, for the sake of simplicity, a vector having the record numbers of the respective records of the data set ($[T_i]$, $[q_i]$xd+$[f_i]$) as elements is taken as the data vector, and the case of rearranging the respective records of the data set ($[T_i]$, $[q_i]$xd+$[f_i]$) by rearranging the elements of the data vector will be described.

First, the grouping unit 113 inputs the data vector and the group information vector (Step S401). In the following, as an example, the data vector is assumed to be

$$[v] = (3, 0, 4, 5, 1, 6, 7, 2)^T.$$

In addition, the group information vector is assumed to be as follows:

$$[g] = [g_i] = (0, 1, 1, 0, 0, 1, 0, 1)^T$$

Next, the grouping unit 113 inputs the classification result as a classification destination vector (Step S402). In the following, as an example, the classification destination vector is assumed to be as follows:

$$[f] = [f_i] = (0, 1, 0, 1, 1, 0, 1, 1)^T$$

Next, the grouping unit 113 calculates a detection vector in which an element to be an end point of each classification destination in each group is detected among the respective elements of the data vector (Step S403). This detection vector is calculated by the following procedure 1 to procedure 2.

Procedure 1: A classification destination unit detection vector in which an element to be an end point of the classification destination in the same group is detected for each value which can be taken as the classification destination is calculated. The classification destination unit detection vector is a vector in which an element at the same position as an element to be the end point of the classification destination in the same group among elements of the data vector is set to 1, and the other elements are set to 0.

For example, when a value which can be taken as the classification destination is "1", the grouping unit 113 first calculates $[e_1] \leftarrow EQ([f], 1)$, and the following $[e_1]$ is obtained.

$$[e_1] = (0, \ 1, \ 0, \ 1, \ 1, \ 0, \ 1, \ 1)^T$$

Next, the grouping unit 113 calculates a cumulative sum from the bottom in the group represented by the information vector [g], and obtains the following $[x_1]$.

$$[x_1] = (1, \ 1, \ 0, \ 2, \ 1, \ 0, \ 2, \ 1)^T$$

Note that calculation of the cumulative sum from the bottom in the group means calculation of the cumulative sum from the lowest element (backmost element) in the group toward the top (front) in order.

Then, the grouping unit 113 obtains the following $[k_1]$ by $[e_1] \times [x_1]$.

$$[k_1] = (0, \ 1, \ 0, \ 2, \ 1, \ 0, \ 2, \ 1)^T$$

Then, the grouping unit 113 calculates $[t_1] \leftarrow EQ([k_1], 1)$ and obtains the following $[t_1]$.

$$[t_1] = (0, \ 1, \ 0, \ 0, \ 1, \ 0, \ 0, \ 1)^T$$

This $[t_1]$ is the classification destination unit detection vector corresponding to the classification destination "1". This classification destination unit detection vector $[t_1]$ is a vector obtained by detecting an end point (that is, a last element) of elements classified into the classification destination [1] in each group. That is, the classification destination unit detection vector $[t_1]$ indicates that the second element of the data vector [v] is the last element (that is, an end point) of the elements classified into the classification destination "1" in the first group. Similarly, it indicates that the fifth element of the data vector [v] is the last element of the elements classified into the classification destination "1" in the third group. Similarly, it indicates that the eighth element of the data vector [v] is the last element of the elements classified into the classification destination "1" in the fourth group.

Similarly, for example, when a value which can be taken as the classification destination is "0", the grouping unit 113 calculates $[e_0] \leftarrow EQ([f], 0)$ and obtains the following $[e_0]$.

$$[e_0] = (1, \ 0, \ 1, \ 0, \ 0, \ 1, \ 0, \ 0)^T$$

Next, the grouping unit 113 calculates a cumulative sum from the bottom in the group represented by the information vector [g], and obtains the following $[x_0]$.

$$[x_0] = (1, \ 0, \ 1, \ 1, \ 1, \ 1, \ 0, \ 0)^T$$

Then, the grouping unit 113 obtains the following $[k_0]$ by $[e_0] \times [x_0]$.

$$[k_0] = (1, \ 0, \ 1, \ 0, \ 0, \ 1, \ 0, \ 0)^T$$

Then, the grouping unit 113 calculates $[t_0] \leftarrow EQ([k_0], 1)$, and obtains the following $[t_0]$.

$$[t_0] = (1, \ 0, \ 1, \ 0, \ 0, \ 1, \ 0, \ 0)^T$$

This $[t_0]$ is the classification destination unit detection vector corresponding to the classification destination "0". This classification destination unit detection vector $[t_0]$ is a vector obtained by detecting an end point (that is, a last element) of elements classified into the classification destination [0] in each group. That is, the classification destination

unit detection vector $[t_0]$ indicates that the first element of the data vector $[v]$ is the last element (that is the end point) of the elements classified into the classification destination "0" in the first group. Similarly, it indicates that the third element of the data vector $[v]$ is the last element of the elements classified into the classification destination "0" in the second group. Similarly, it indicates that the sixth element of the data vector $[v]$ is the last element of the elements classified into the classification destination "0" in the third group.

Procedure 2: The sum of all classification destination unit detection vectors is calculated as the detection vector.

That is, for example, when the classification destination unit detection vectors $[t_0]$ and $[t_1]$ are obtained, the grouping unit 113 obtains the following detection vector $[t]$ from $[t]= [t_0] + [td$.

$$[t]= (1, 1, 1, 0, 1, 1, 0, 1)^T$$

This detection vector $[t]$ is a vector obtained by detecting the element which is the end point of each classification destination "0" and "1" in each group among elements of the data vector.

Next, the grouping unit 113 performs a stable sort for the data vector and the detection vector by the classification destination vector, respectively, and obtains the classified data vector and the group information vector (Step S404).

That is, for example, the grouping unit 113 performs the stable sort for the data vector $[v]$ in ascending order of the elements of the classification destination vector $[f]$ to obtain the following $[v']$.

$$[v']= (3, 4, 6, 0, 5, 1, 7, 2)^T$$

This $[v']$ is the data vector after the classification.

Similarly, for example, the grouping unit 113 performs stable sort for the detection vector $[t]$ in ascending order of the elements of the classification target vector $[f]$ to obtain the following $[g']$.

$$[g']= (1, 1, 1, 1, 0, 1, 0, 1)^T$$

This $[g']$ is the group information vector after the classification.

Then, the grouping unit 113 outputs the classified data vector and the classified group information vector (Step S405).

Thus, the data set obtained by rearranging the data set $([T_{i+1}], [g_{i+1}])$ obtained by rearranging the record numbers of $([T_i], [q_i]xd+[f_i])$ to $[v']$ and the group information vector $[g_{i+1}]= [g']$ are obtained.

<Conclusion>

As described above, when learning a secret decision tree from a given data set of secret values, the secret decision tree learning device 10 according to the present embodiment collectively divides the data set at all nodes of the same hierarchical level, and thereby, can reduce the number of times of reference to the entire data set exponentially. Specifically, for example, when the decision tree is a binary tree having a height h or less, the number of times of reference of $\Theta(2h)$ is required in the conventional technique, whereas in the secret decision tree learning device 10 according to the present embodiment, it can be O(h).

The present invention is not limited to the above-described embodiment specifically disclosed, and various modifications and changes, combinations with known techniques, and the like are possible without departing from the description of the claims.

[Reference Signs List]

10      Secret decision tree learning device
101     Input unit
102     Secret decision tree learning unit
103     Output unit
104     Storage unit
111     Initialization unit
112     Division unit

| | |
|---|---|
| 113 | Grouping unit |
| 114 | Node extraction unit |
| 201 | Input device |
| 202 | Display device |
| 203 | External I/F |
| 203a | Recording medium |
| 204 | Communication I/F |
| 205 | Processor |
| 206 | Memory device |
| 207 | Bus |

**Claims**

1. A secret decision tree learning device for learning a decision tree by secret calculation, comprising:

   an input unit configured to input a data set composed of a plurality of records including one or more attribute values of explanatory variables and attribute values of objective variables; and
   a learning unit configured to learn the decision tree by collectively dividing the data set at all nodes included in a hierarchical level, for each of a plurality of hierarchical levels of the decision tree.

2. The secret decision tree learning device according to claim 1, wherein the learning unit collectively divides the data set into smaller groups at all the nodes included in the hierarchical level by using the data set divided into one or more groups in a preceding hierarchical level and a group information vector representing groups to which the records included in the data set belongs, for each of the plurality of hierarchical levels of the decision tree.

3. The secret decision tree learning device according to claim 2, wherein the data set is configured to have records belonging to a same group arranged consecutively, and
   wherein the group information vector is a vector in which an element corresponding to a last record among the records belonging to the same group among the records configuring the data set is set to 1, and an element other than the element corresponding to the last record is set to 0.

4. The secret decision tree learning device according to claim 2 or 3, wherein the hierarchical level is defined as i (where i = 1, ..., h), and

   wherein the learning unit calculates a parameter $[p_i]$ representing a division condition at each node included in an hierarchical level i by using a data set $[T_i]$ divided into one or more groups in the preceding hierarchical level and a group information vector $[g_i]$ representing the one or more groups to which records included in the data set $[T_i]$ belong,
   classifies the records included in the data set $[T_i]$ into nodes of a hierarchical level i+1 by using the data set $[T_i]$ and the parameter $[p_i]$, and
   repeats, for each of the hierarchical levels i, calculation of the data set $[T_{i+1}]$ and the group information $[g_{i+1}]$ by using the data set $[T_i]$, the parameter $[p_i]$, a result of the classification, and information indicating nodes into which the records included in the data set $[T_i]$ are classified.

5. A secret decision tree learning system for learning a decision tree by secret calculation, comprising:

   an input unit configured to input a data set composed of a plurality of records including one or more attribute values of explanatory variables and attribute values of objective variables; and
   a learning unit configured to learn the decision tree by collectively dividing the data set at all nodes included in a hierarchical level, for each of a plurality of hierarchical levels of the decision tree.

6. A secret decision tree learning method for learning a decision tree by secret calculation, comprising:

   an input procedure for inputting a data set composed of a plurality of records including one or more attribute values of explanatory variables and attribute values of objective variables; and
   a learning procedure for learning the decision tree by collectively dividing the data set at all nodes included in a hierarchical level, for each of a plurality of hierarchical levels of the decision tree.

7. A program causing a computer to function as the secret decision tree learning device according to any one of claims 1 to 4.

Fig. 1

~10

SECRET DECISION TREE LEARNING UNIT

INPUT UNIT ~101

SECRET DECISION
TREE LEARNING UNIT ~102

104

INITIALIZATION UNIT ~111

STORAGE UNIT

DIVISION UNIT ~112

GROUPING UNIT ~113

NODE EXTRACTION UNIT ~114

OUTPUT UNIT ~103

Fig. 2

Fig. 3

```
                        ( START )
                            │
                            ▼
┌──────────────────────────────────────────────┐
│           INPUT TRAINING DATA SET             │──S101
└──────────────────────────────────────────────┘
                            │
                            ▼
┌──────────────────────────────────────────────┐
│          INITIALIZE GROUP INFORMATION         │──S102
│       VECTOR AND TAKEOVER PARAMETER           │
└──────────────────────────────────────────────┘
                            │
                            ▼
┌──────────────────────────────────────────────┐
│   CALCULATE DIVISION PARAMETER FROM TRAINING  │──S103
│    DATA SET AND GROUP INFORMATION VECTOR      │
└──────────────────────────────────────────────┘
                            │
                            ▼
┌──────────────────────────────────────────────┐
│  CALCULATE CLASSIFICATION RESULT FROM TRAINING│──S104
│     DATA SET AND DIVISION PARAMETER           │
└──────────────────────────────────────────────┘
                            │
                            ▼
┌──────────────────────────────────────────────┐
│    CALCULATE TRAINING DATA SET AND TAKEOVER   │
│  PARAMETER OF NEXT LAYER FROM TRAINING DATA   │──S105
│  SET, DIVISION PARAMETER, GROUP INFORMATION   │
│     VECTOR, AND CLASSIFICATION RESULT         │
└──────────────────────────────────────────────┘
                            │
                            ▼
┌──────────────────────────────────────────────┐
│     EXTRACT INFORMATION OF EACH NODE FROM     │──S106
│  TAKEOVER PARAMETER AND DIVISION PARAMETER    │
└──────────────────────────────────────────────┘
                            │
                            ▼
┌──────────────────────────────────────────────┐
│       OUTPUT INFORMATION OF EACH NODE         │──S107
└──────────────────────────────────────────────┘
                            │
                            ▼
                         ( END )
```

REPEAT FOR EACH LAYER

Fig. 4

```
                    ( START )
                        │
                        ▼
┌─────────────────────────────────────────────────┐
│ INPUT NUMERICAL ATTRIBUTE VALUE VECTOR, LABEL    │─~S201
│ VALUE VECTOR, AND GROUP INFORMATION VECTOR       │
└─────────────────────────────────────────────────┘
                        │
                        ▼
┌─────────────────────────────────────────────────┐
│ REARRANGE ELEMENTS OF NUMERICAL ATTRIBUTE VALUE  │
│ VECTOR AND LABEL VALUE VECTOR IN ASCENDING ORDER │─~S202
│ OF NUMERICAL ATTRIBUTE VALUE FOR EACH GROUP      │
└─────────────────────────────────────────────────┘
                        │
                        ▼
┌─────────────────────────────────────────────────┐
│ CALCULATE BIT VECTOR REPRESENTING                │
│ ELEMENT MATCHING LABEL VALUE FOR                 │─~S203
│ EACH VALUE THAT LABEL CAN TAKE                   │
└─────────────────────────────────────────────────┘
                        │
                        ▼
┌─────────────────────────────────────────────────┐
│ CALCULATE FIRST JUDGEMENT VECTOR BY              │
│ AGGREGATION FUNCTION CUMULATIVE SUM OPERATION    │─~S204
└─────────────────────────────────────────────────┘
                        │
                        ▼
┌─────────────────────────────────────────────────┐
│ CALCULATE AGGREGATION TOTAL SUM VECTOR           │
│ BY AGGREGATION FUNCTION TOTAL SUM OPERATION      │─~S205
└─────────────────────────────────────────────────┘
                        │
                        ▼
┌─────────────────────────────────────────────────┐
│ CALCULATE SECOND JUDGEMENT VECTOR                │
│ FROM FIRST JUDGEMENT VECTOR AND                  │─~S206
│ AGGREGATION TOTAL SUM VECTOR                     │
└─────────────────────────────────────────────────┘
                        │
                        ▼
┌─────────────────────────────────────────────────┐
│ CALCULATE FREQUENCY FOR EACH                     │
│ GROUP AND FOR EACH DIVISION CONDITION            │─~S207
└─────────────────────────────────────────────────┘
                        │
                        ▼
┌─────────────────────────────────────────────────┐
│ CALCULATE EVALUATION VALUE FOR                   │
│ EACH GROUP AND FOR EACH DIVISION CONDITION       │─~S208
└─────────────────────────────────────────────────┘
                        │
                        ▼
┌─────────────────────────────────────────────────┐
│ OUTPUT DIVISION CONDITION FOR MAXIMIZING         │
│ EVALUATION VALUE IN EACH GROUP BY                │─~S209
│ AGGREGATION FUNCTION MAXIMUM VALUE OPERATION     │
└─────────────────────────────────────────────────┘
                        │
                        ▼
                    (  END  )
```

Fig. 5

```
                        ┌─────────────┐
                        │    START    │
                        └──────┬──────┘
                               │
        ┌──────────────────────▼──────────────────────┐
        │  INPUT CATEGORY ATTRIBUTE VALUE VECTOR, LABEL │ ～S301
        │  VALUE VECTOR, AND GROUP INFORMATION VECTOR   │
        └──────────────────────┬──────────────────────┘
                               │
        ┌──────────────────────▼──────────────────────┐
        │  CALCULATE BIT VECTOR REPRESENTING ELEMENT    │
        │  MATCHING COMBINATION OF CATEGORY ATTRIBUTE   │
        │  VALUE AND LABEL VALUE FOR EACH COMBINATION   │ ～S302
        │  OF VALUE THAT THE CATEGORY ATTRIBUTE         │
        │  CAN TAKE AND VALUE THAT LABEL CAN TAKE       │
        └──────────────────────┬──────────────────────┘
                               │
        ┌──────────────────────▼──────────────────────┐
        │  CALCULATE JUDGEMENT VECTOR BY AGGREGATION    │ ～S303
        │  FUNCTION TOTAL SUM OPERATION                 │
        └──────────────────────┬──────────────────────┘
                               │
        ┌──────────────────────▼──────────────────────┐
        │  CALCULATE FREQUENCY FOR EACH GROUP           │ ～S304
        │  AND FOR EACH DIVISION CONDITION              │
        └──────────────────────┬──────────────────────┘
                               │
        ┌──────────────────────▼──────────────────────┐
        │  CALCULATE EVALUATION VALUE FOR EACH GROUP    │ ～S305
        │  AND FOR EACH DIVISION CONDITION              │
        └──────────────────────┬──────────────────────┘
                               │
        ┌──────────────────────▼──────────────────────┐
        │  OUTPUT DIVISION CONDITION FOR MAXIMIZING     │
        │  EVALUATION VALUE IN EACH GROUP BY AGGREGATION│ ～S306
        │  FUNCTION MAXIMUM VALUE OPERATION             │
        └──────────────────────┬──────────────────────┘
                               │
                        ┌──────▼──────┐
                        │     END     │
                        └─────────────┘
```

Fig. 6

```
                           ( START )
                               │
                               ▼
        ┌──────────────────────────────────────────────┐
        │ INPUT DATA VECTOR AND GROUP INFORMATION VECTOR │──S401
        └──────────────────────────────────────────────┘
                               │
                               ▼
        ┌──────────────────────────────────────────────┐
        │       INPUT CLASSIFICATION DESTINATION VECTOR  │──S402
        └──────────────────────────────────────────────┘
                               │
                               ▼
        ┌──────────────────────────────────────────────┐
        │            CALCULATE DETECTION VECTOR          │──S403
        └──────────────────────────────────────────────┘
                               │
                               ▼
        ┌──────────────────────────────────────────────┐
        │    PERFORM STABLE SORT FOR DATA VECTOR AND     │
        │ DETECTION VECTOR TO OBTAIN CLASSIFIED DATA     │──S404
        │    VECTOR AND GROUP INFORMATION VECTOR         │
        └──────────────────────────────────────────────┘
                               │
                               ▼
        ┌──────────────────────────────────────────────┐
        │         OUTPUT CLASSIFIED DATA VECTOR          │
        │         AND GROUP INFORMATION VECTOR           │──S405
        └──────────────────────────────────────────────┘
                               │
                               ▼
                           ( END )
```

**EP 4 231 273 A1**

| | INTERNATIONAL SEARCH REPORT | | International application No. |
|---|---|---|---|
| | | | PCT/JP2020/039123 |

**A. CLASSIFICATION OF SUBJECT MATTER**
G09C 1/00(2006.01)i; G06N 20/00(2019.01)i
FI: G09C1/00 650Z; G06N20/00

According to International Patent Classification (IPC) or to both national classification and IPC

**B. FIELDS SEARCHED**

Minimum documentation searched (classification system followed by classification symbols)
G09C1/00; G06N20/00

| Documentation searched other than minimum documentation to the extent that such documents are included in the fields searched | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | LINDELL, Yehuda, PINKAS, Benny, "Privacy Preserving Data Mining", Advances in Cryptology – CRYPTO 2000, Springer-Verlag Berlin Heidelberg, 11 August 2000, pp. 36-54, [online], [retrieved on 25 November 2020], Retrieved from <https://link.springer.com/chapter/10.1007/3-540-44598-6_3> <doi: 10.1007/3-540-44598-6_3>, ISEN 978-3-540-44598-2, pp. 36-37, chapter 1, pp. 38-39, chapter 2, p. 43, section 4.3, pp. 43-48, chapter 5, p. 48, fig. 2, p. 54, lines 9–12 | 1, 5–7<br>2–4 |
| A | WO 2019/208484 A1 (NIPPON TELEGRAPH AND TELEPHONE CORP.) 31 October 2019 (2019-10-31) paragraph [0008] | 2–4, 7 |

☐ Further documents are listed in the continuation of Box C.    ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 November 2020 (26.11.2020) | 08 December 2020 (08.12.2020) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**
Information on patent family members

International application No.

PCT/JP2020/039123

| Patent Documents referred in the Report | Publication Date | Patent Family | Publication Date |
|---|---|---|---|
| WO 2019/208484 A1 | 31 Oct. 2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KOJI CHIDA ; KOKI HAMADA ; DAI IKARASHI ; KATSUMI TAKAHASHI.** Reconsideration of Light-Weight Verifiable Three-Party Secret Function Calculation. *CSS,* 2010